# EUROPÄISCHE PATENTSCHRIFT

(11) **EP 0 638 140 B1**
(45) Veröffentlichungstag und Bekanntmachung des Hinweises auf die Patenterteilung: **28.02.1996**
(21) Anmeldenummer: 93909834.9
(22) Anmeldetag: 24.04.1993
(51) Int. Cl.: F01N 3/20, F01N 3/28

(54) **REAKTOR ZUR KATALYTISCHEN BEHANDLUNG GASFÖRMIGER FLUIDE**
REACTOR FOR CATALYTICALLY PROCESSING GASEOUS FLUIDS
REACTEUR DE TRAITEMENT CATALYTIQUE DE FLUIDES GAZEUX

(30) Priorität: 30.04.1992 DE 4214579
(43) Veröffentlichungstag der Anmeldung: 15.02.1995
(73) Patentinhaber: GAISER, Gerd, D-72768 Reutlingen (DE)
(72) Erfinder: GAISER, Gerd, D-72768 Reutlingen (DE)
(74) Vertreter: Gleiss, Alf-Olav, Dipl.-Ing.
(86) Internationale Anmeldenummer: EP9300995
(87) Internationale Veröffentlichungsnummer: WO9322544

(56) Entgegenhaltungen:
- EP-A- 0 504 719
- DE-A- 2 401 204
- DE-A- 3 536 309
- US-A- 3 910 042
- US-A- 3 972 685

## Beschreibung

Die Erfindung betrifft einen Reaktor zur katalytischen Behandlung gasförmiger Fluide, bei denen neben der katalytischen Reaktion ein Wärmeaustausch stattfindet.

Es ist bekannt, daß zur Abluftreinigung, beispielsweise lösemittelhaltiger Luft aus Industrie und technischer Synthese, Katalysatoren eingesetzt werden. Dabei wird die Abluft durch einen Reaktor geleitet, in dem ein Katalysator angeordnet ist. Für eine katalytische Oxidation ist typisch, daß das zu behandelnde Fluid einerseits eine bestimmte Ausgangstemperatur benötigt, damit die katalytische Reaktion in Gang kommt, und andererseits während der katalytischen Reaktion Wärme durch exotherme Reaktion freigesetzt wird.

Somit ist es erforderlich, die freigesetzte Wärme abzuführen, damit es nicht zu Überhitzungen und zur Zerstörung des Katalysators kommt, und insbesondere in der Anfangsreaktion Wärme zuzuführen.

Hierzu ist bereits bekannt geworden, einen Abluftreaktor mit periodisch wechselnder Strömungsrichtung vorzusehen. Neben dem hohen technischen Aufwand ist insbesondere nachteilig, daß beim Wechsel der Strömungsrichtung die im ehemaligen Zulauf befindliche Luftmenge ungereinigt ausgeschoben wird.

Es wurde weiter vorgeschlagen, eine katalytische Abluftreinigung mit einem rotierenden Katalysator durchzuführen. Dabei wird der Abluftstrom durch die Drehbewegung des Katalysators radial oder axial im periodischen Wechsel durch den Katalysator geführt. Durch den Einsatz rotierender Teile ergeben sich große Probleme bei der Abdichtung, und durch einen Wechsel der Durchströmungsrichtung kommt es ebenfalls zu sogenannten Totvolumen, also nicht behandelten Abluftmengen.

Ferner ist aus der US-PS 3,972,685 ein Reaktor bekannt, der Fluidpfade mit gegenläufiger Strömung aufweist. Diese Fluidpfade sind über ihre gesamte Länge mit Katalysator ausgestattet. Durch ein Umschalten von Klappen soll ein katalytisch wirkender Strömungsweg für das Fluid verlängert werden.

Der Erfindung liegt die Aufgabe zugrunde, einen Reaktor der gattungsgemäßen Art zu entwickeln, der ohne Änderung der Durchströmungsrichtung eine kontinuierliche Betriebsweise ermöglicht.

Erfindungsgemäß wird diese Aufgabe mittels eines Reaktors mit den im Anspruch 1 genannten Merkmalen gelöst. Dadurch, daß benachbarte Fluidpfade in mindestens einem Teilbereich mit Katalysator ausgestattet sind und nicht mit Katalysator ausgestattete Bereiche als Wärmetauscher zwischen den benachbarten Fluidpfaden dienen, ist es vorteilhaft möglich, das gasförmige Fluid derart durch die Fluidpfade zu leiten, daß sich Bereiche gegenläufiger Strömungen in benachbarten Fluidpfaden ergeben und das gasförmige Fluid in den benachbarten Fluidpfaden jeweils derart einer katalytischen Behandlung unterzogen werden kann, daß ein gegenseitiger Wärmeaustausch zwischen den benachbarten Fluidpfaden erfolgt. Über diesen Wärmeaustausch ist eine gezielte, gegenseitige Wärmebeeinflussung des Fluids in dem jeweils benachbarten Fluidpfad möglich. Hierbei können in den benachbarten Fluidpfaden sowohl zwei voneinander unabhängige Fluidströmungen herrschen oder eine gemeinsame Fluidströmung, die nach Durchströmung des einen Fluidpfades umgelenkt, oder durch die herrschenden Strömungsverhältnisse zwangsläufig durch den benachbarten Fluidpfad im Gegenstrom geführt wird.

Durch die Anordnung der Fluidpfade wird es möglich, innerhalb der Fluidpfade unterschiedliche Funktionszonen mit unterschiedlicher Temperatur zu erreichen, so daß eine gezielte, unmittelbare Wärmeübertragung innerhalb zweier, mit einem Fluid beaufschlagter, benachbarter Fluidpfade erfolgt. Die während der katalytischen Reaktion gewonnene Reaktionswärme kann so sehr vorteilhaft auf den benach barten Fluidpfad abgegeben werden, so daß, bei entsprechender Ansteuerung des Reaktors, eine Verschiebung der Reaktionszone innerhalb des Reaktors, das heißt, innerhalb der Fluidpfade möglich wird. Damit ist sehr vorteilhaft eine Anpassung der katalytischen Reaktion beispielsweise an eine wechselnde Belastung des zu behandelnden gasförmigen Fluids möglich.

Als besonders vorteilhaft hat sich erwiesen, wenn die Strukturen eine von einer ebenen Fläche abweichende Oberfläche, beispielsweise eine gewellte, besitzen und nur in ihrem Mittelbereich mit einem Katalysator ausgestattet werden, so daß der Anfangs- und Endbereich jeweils keinen katalytischen Bereich aufweist.

Durch die gewellte Struktur der Platten entsteht zwischen zwei je dieser Platten ein Strömungskanal mit sehr hohem örtlichen Wärme- und Stoffübergang an den Platten.

Dieser Effekt wird in vorteilhafter Weise ausgenutzt, indem erfindungsgemäß zwischen in zwei benachbarten Kanälen die Abluft im Gegenstromprinzip geleitet wird.

Dazu wird der Fluidstrom aufgeteilt und nur jedem zweiten Strömungskanal in einer Richtung zugeführt. Damit wird erreicht, daß in einem ersten nicht mit Katalysator ausgestatteten Wellblechplattenbereich die Wärme aus der bereits den Katalysator passierten und durch die exotherme Reaktion erwärmte Luft an diesen Plattenbereich abgegeben wird und im benachbarten Kanal die noch zu katalysierende Abluft durch den Wärmeübergang vorgewärmt wird. In einem zweiten, ebenfalls nicht mit Katalysator ausgestatteten, Wellblechplattenbereich erfolgt derselbe Wärmeübergang, jedoch genau in die entgegengesetzte Richtung.

In einer Weiterbildung der Erfindung ist vorgesehen, das Fluid durch jeweils zwei miteinander verbundene benachbarte Kanäle zu führen, so daß die in einem Fluidstrom entstandene Reaktionswärme an den eigenen Fluidstrom zum Vorheizen abgegeben werden kann.

Anstelle der Abdichtung können die Kanäle auch in einem gemeinsamen Sammelkanal enden und von dort aus die jeweils benachbarten Kanäle durchströmen. Diese Strömungsweise ergibt sich zwangsweise, da das Fluid mit einem Eigendruck dem Reaktor zugeführt wird.

Hierbei ist in vorteilhafter Ausgestaltung vorgesehen, daß der Sammelkanal eine Einrichtung zur Wärme-Ab-und/oder-Zuführung besitzt. Somit kann alternierend entsprechend dem Reaktionsverlauf, stark oder weniger stark exotherm, der Wärmehaushalt reguliert werden.

Durch eine geeignete Gestaltung der Plattenoberfläche läßt sich sowohl ein sehr hoher Wärme- und Stoffübergang zwischen Fluid und Wand erzielen, als auch ein definiertes, einheitliches Verweilzeitverhalten und eine homogene Quervermischung in der Fluidphase.

Die Gestaltung der Plattenoberfläche hinsichtlich eines sehr hohen Wärmeübergangs ist entscheidend, da zum Beispiel bei der katalytischen Reinigung lösungsmittelhaltiger Abluft die Schadstoffkonzentration gering ist und damit ist auch der durch die Katalyse entstehende Heizwert gering. Dies ergibt eine geringe Temperaturdifferenz zwischen Zu- und Abluft. Daraus resultiert eine relativ geringe Erwärmung der Luft durch die Reaktion und damit eine relativ geringe Temperaturdifferenz zwischen gereinigter Abluft nach der Reaktion und vorgereinigter Zuluft vor der Reaktion.

Um nun die in den Reaktor einströmende Luft auf Reaktionstemperatur zu bringen muß die - bei geringer Lösemittelkonzentration in der Abluft relativ geringe Wärmemenge - möglichst vollständig an die zuströmende Luft übertragen werden.

Im Sinne der Erfindung ist ebenfalls, daß neben den bisher beschriebenen autothermen Reaktortypen auch die Verwendung bei stark exothermen oder stark endothermen Reaktionen vorgesehen ist. Bei diesen Reaktortypen ist eine einheitliche Wärmezu- oder Abfuhr erforderlich, da es sonst zu einer Zerstörung des Katalysators kommt, bzw. bei endothermer Reaktion zu einem Verlöschen der Reaktion.

Hierzu sind erfindungsgemäß zu den bereits beschriebenen Fluidpfade bildenden Strukturen zusätzliche Heiz- und/oder Kühlkanäle vorgesehen. Diese sind vorzugsweise jeweils zwischen zwei Reaktionspfaden angeordnet.

Die Bauformen können den jeweiligen Erfordernissen angepaßt sein, beispielsweise kann für den autothermen Betrieb die Oberflächenprägung der Wärmeaufnahme- und Wärmeabgabezonen für einen anderen Wärme- bzw. Stoffübergang ausgelegt werden als die Reaktionszone.

In weiterer vorteilhafter Ausgestaltung der Erfindung kann vorgesehen sein, daß die beschriebenen Platten so zueinander versetzt angeordnet sind, daß die benachbarten Platten sich an den sich gegenüberstehenden Wellenstrukturen berühren. Die Wellenstrukturen können eine unterschiedliche Dimensionierung sowohl in der Höhe als auch im Abstand zueinander haben.

Es kann auch sehr zweckmäßig sein, daß die benachbarten Platten eine entgegengesetzte Orientierung haben, so daß sich die Platten aufeinander abstützen. Bei diesem Aufbau lassen sich die besten Ergebnisse erzielen.

Weitere vorteilhafte Lösungen ergeben sich aus den Unteransprüchen.

Die Erfindung wird nachfolgend in mehreren Ausführungsbeispielen anhand der zugehörigen Zeichnungen näher erläutert. Es zeigen:
Figur 1 einen Reaktor in eingängiger Bauweise;
Figur 2 einen Reaktor in zweigängiger Bauweise;
Figur 3 einen Reaktor in zweigängiger Bauweise mit Sammelkanal;
Figur 4 einen Reaktor mit zusätzlichen Heiz- oder Kühlkanälen;
Figur 5 einen weiteren Reaktor mit Heiz- oder Kühlkanälen;
Figur 6 eine Variante der Plattenanordnung;
Figur 7 eine weitere Variante der Plattenanordnung und
Figur 8 eine Variante der Plattengestaltung.

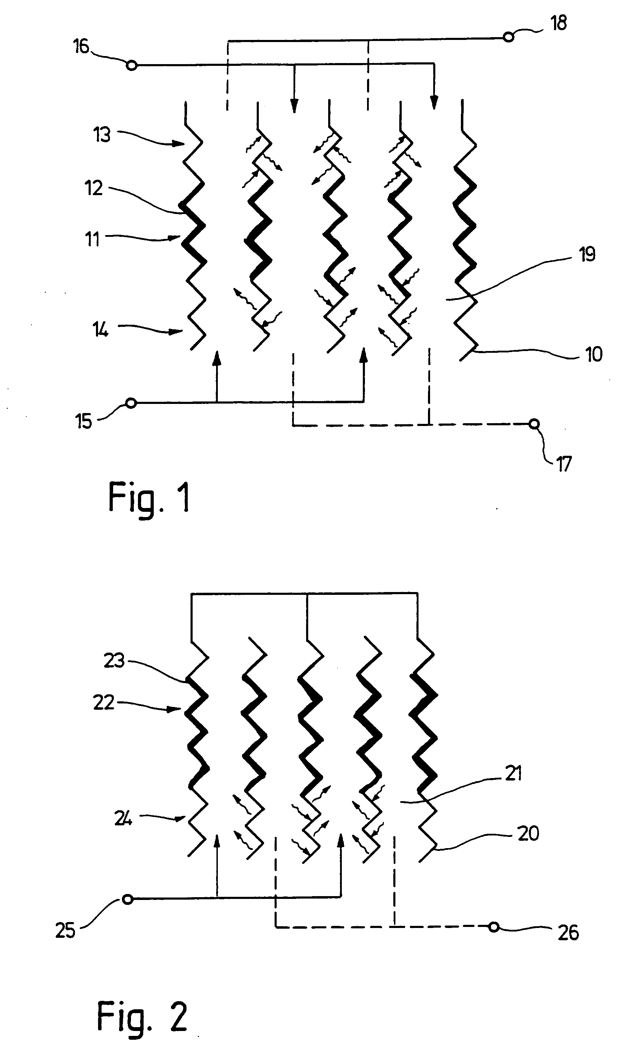

In Figur 1 ist ein Reaktor zur katalytischen Behandlung gasförmiger Fluide gezeigt. Der Übersichtlichkeit halber wurde hier und in den weiteren Figuren auf die Darstellung des Reaktorgehäuses verzichtet.

Es sind mehrere, hier eine gewellte Struktur aufweisende, Platten 10 parallel derart zueinander angeordnet, daß sich zwischen den Platten 10 Kanäle 19 ergeben. Die Platten 10 besitzen einen Bereich 11, in dem die Platten beidseitig mit einem Katalysator 12 ausgestattet, hier beispielsweise beschichtet sind. Darüber hinaus besitzen die Platten 10 Bereiche 13 und 14, in denen kein Katalysator vorgesehen ist, also keine Beschichtung erfolgt. Zum Einbringen des Fluids sind ein Einlaß 15 und ein Einlaß 16 und zum Abführen des Produktes ein Auslaß 17 und ein Auslaß 18 vorgesehen.

### Die Funktionsweise des Reaktors ist folgende:

Das über die Einlässe 15 zugeführte Fluid wird so aufgeteilt, daß es nur jeden zweiten Kanal 19 in einer Richtung durchströmt. Das über den Einlaß 16 zugeführte Fluid wird ebenfalls in jeden zweiten Kanal 19 eingeleitet, so daß sich in zwei benachbarten Kanälen 19 jeweils ein Gegenstrom ergibt. Wenn das Fluid den mit dem Katalysator 12 ausgestatteten beziehungsweise beschichteten Bereich 11 passiert, kommt es zur katalytischen Reaktion. Bei dieser Reaktion wird Wärme freigesetzt, die das Fluid aufnimmt. Indem das Fluid nunmehr den Bereich 13 passiert, gibt es Wärme an die Platten 10 ab. Da im benachbarten Kanal 19 noch unbehandeltes und damit kälteres Fluid einströmt, nimmt dieses hier Wärme auf. So vorgewärmt tritt dieses Fluid in die Reaktionszone seines Kanals 19 ein und wird katalytisch behandelt. Durch die exotherme Reaktion wird das Fluid weiter erwärmt und gibt wiederum Wärme an die Platten 10 im Bereich 14 ab.

Durch die wechselseitige Durchströmung der Kanäle 19 ergibt sich somit eine autotherme Verfahrensführung. In jedem Strömungskanal ergeben sich verschiedene Funktionsbereiche: im ersten Teil wird das Fluid aufgeheizt, reagiert im mittleren Teil und gibt im dritten Teil die Wärme an das Fluid in den Nachbarkanälen ab. Damit ist gewährleistet, daß das Fluid auf die jeweilige Vorreaktionstemperatur vorgewärmt wird. Lediglich beim ersten Inbetriebsetzen des Reaktors kann eine zusätzliche einmalige Vorwärmung des Fluids notwendig sein.

Der Wärmefluß in den Platten kann durch die Wahl der Plattenstärke, des Plattenmaterials und der Oberflächenstrukturierung verändert und damit beeinflußt werden.

Auch in der hier nicht gezeigten Möglichkeit der durchgehenden Ausstattung beziehungsweise Beschichtung der Platten 10 mit einem Katalysator 12 stellen sich Bereiche mit verschiedenen Temperaturen und damit verschiedene Funktionen (aufheizen, katalytische Reaktion, abkühlen) ein. Es bedarf zum Beispiel einer Aufheizzeit des Fluids, so daß der erste Bereich kühler ist und im letzten ebenfalls mit Katalysator beschichteten Bereich keine weitere Erwärmung mehr erfolgt, da durch die bereits vorher stattgefundene Katalyse keine Wärmeumsetzung im gereinigten Fluid mehr erfolgt.

Figur 2 zeigt eine andere Variante eines Reaktors. Es sind ebenfalls mehrere eine gewellte Struktur aufweisende Platten 20 parallel angeordnet, so daß sich Kanäle 21 ergeben. Die Platten 20 haben einen Bereich 22, in dem sie beidseitig mit einem Katalysator 23 ausgestattet beziehungsweise beschichtet sind und einen Bereich 24, in dem keine Beschichtung erfolgt. Jeweils zwei nicht benachbarte Platten 20 sind miteinander verbunden, so daß zwei Kanäle 21 einen zusammenhängenden, geknickt verlaufenden Reaktionsraum ergeben. Der Reaktor verfügt über einen Einlaß 25 für das Fluid und.einen Auslaß 26 für das Produkt.

### Die Funktionsweise ist folgende:

Das Fluid wird über den Einlaß 25 dem Reaktor zugeführt und so aufgeteilt, daß es in jeden zweiten Kanal 21 einströmt. Im Bereich 22 der Platten 20 erfolgt die katalytische Reaktion. Diese Reaktion erfolgt sowohl beim Aufströmen als auch beim Abwärtsströmen des Fluids. Das durch die exotherme Reaktion aufgeheizte Fluid gibt beim abwärtigen Vorbeiströmen Wärme an die Platten 20 im Bereich 24 ab. Die hier abgegebene Wärme wird vom im benachbarten Kanal 21 aufströmenden Fluid aufgenommen, das sich somit auf die notwendige Vorreaktionstemperatur vorwärmt.

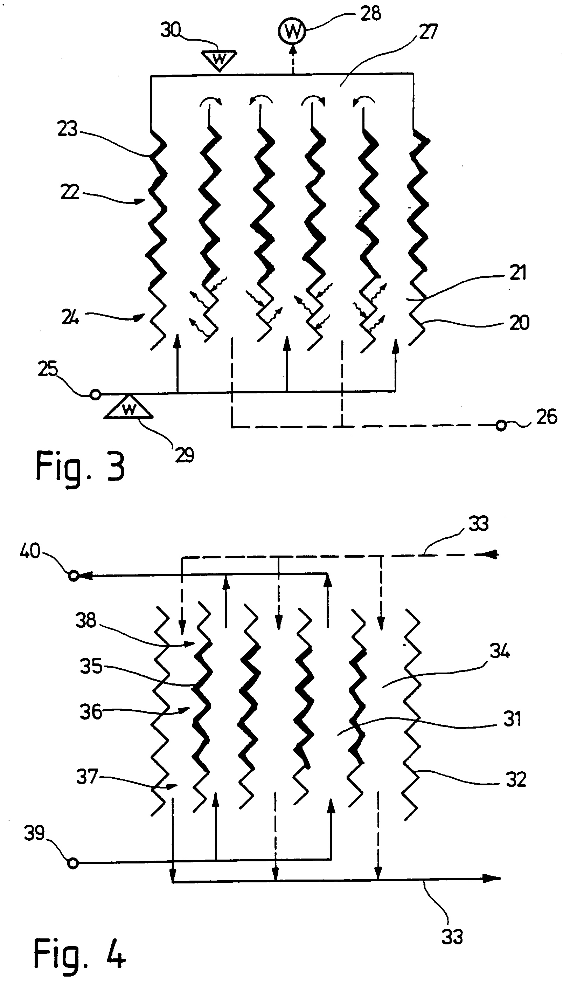

In Figur 3 ist eine weitere Variante des Reaktors gezeigt. Dieser dem in Figur 2 dargestellten, im Aufbau ähnelnde Reaktor hat anstelle der Verbindung von zwei nicht benachbarten Platten 20 einen Sammelkanal 27. In diesem Sammelkanal münden die Kanäle 21, wobei das Fluid in unterschiedlichen Kanälen zurückströmen kann.

Im hier gezeigten Ausführungsbeispiel ist am Sammelkanal 27 ein Abzug 28 für Wärmeenergie vorgesehen. Hierdurch ist es insbesondere möglich, bei stark exotherm verlaufenden katalytischen Reaktionen überschüssige Wärmeenergie abzuführen. Die Wärmeabfuhr erfolgt nur insoweit, daß eine ausreichend große Wärmemenge zur Erwärmung der Platten 20 im Bereich 24 zur Verfügung steht.

Weiterhin sind zwei externe Vorheizeinrichtungen 29 und 30 vorgesehen. Diese Vorheizeinrichtungen werden bei der Inbetriebsetzung des Reaktors benötigt, um das Fluid auf die notwendige Reaktionstemperatur vorzuheizen. Dafür stehen wahlweise die Vorheizeinrichtung 29 im Zufluß des Fluids und die Vorheizeinrichtung 30 am Sammelkanal 27 zur Verfügung.

Die bisher beschriebenen Ausführungsbeispiele sind in erster Linie auf eine autotherme Betriebsweise ausgelegt.

Figur 4 zeigt eine Ausführungsform des Reaktors, die bei stark exothermen oder stark endothermen Reaktionen zur Anwendung kommmt. Hier sind jeweils zwischen zwei einen Reaktionsraum 31 bildenden Platten 32 zu einem Kühl- oder Heizkreislauf 33 gehörende Kanäle 34 angeordnet. Die Platten 32 besitzen einen mit Katalysator 35 beschichteten Bereich 36 und einen unteren Bereich 37 und einen oberen Bereich 38, der unbeschichtet ist.

Die Platten 32 sind jeweils nur an der im Reaktionspfad befindlichen Seite mit Katalysator beschichtet.

### Die Funktionsweise ist folgende:

Über den Einlaß 39 wird das Fluid dem Reaktor zugeführt und in den Reaktionsraum 31 geleitet. Dort erfahren die Fluide die bereits beschriebene katalytische Behandlung im Bereich 36 und werden über den Auslaß 40 wieder entnommen. Je nachdem, ob es sich um eine stark exotherme oder stark endotherme Katalyse handelt, wird durch die Kanäle 34 ein Kühl- oder Heizmedium geleitet. Dieses führt aus dem Reaktionsraum 31 entweder Wärme ab oder zu. Damit wird die katalytische Reaktion im Gleichgewicht gehalten. Die Bereiche 37 und 38 bilden die bei den oberen Beispielen erwähnten Aufheiz- bzw. Abkühlzonen für das Fluid.

In einem weiteren, nicht dargestellten, Ausführungsbeispiel kann auf die nicht mit einem Katalysator ausgestatteten beziehungsweise unbeschichteten Bereiche 37 und 38 verzichtet werden, so daß die Platten 32 auf ihrer gesamten Länge mit dem Katalysator 35 ausgestattet beziehungsweise beschichtet sind. Die Abkühlung bzw. Aufheizung erfolgt dann ausschließlich durch die durch die Kanäle 34 geleiteten Medien.

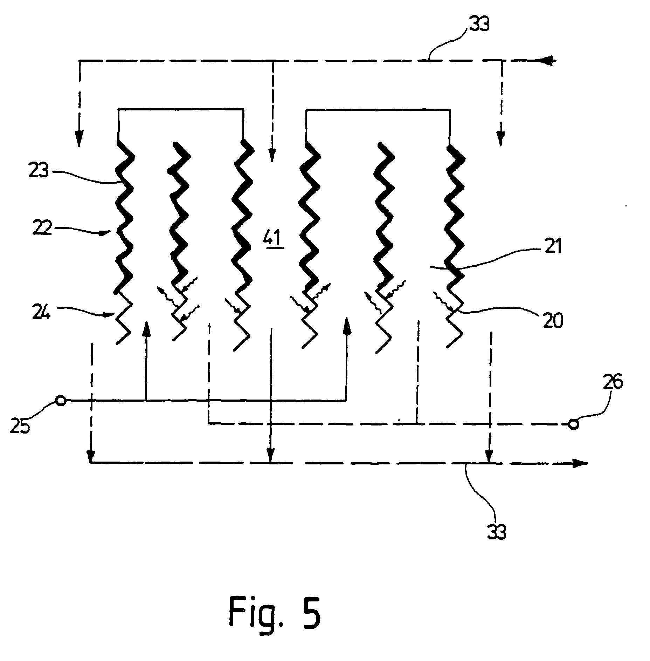

Eine weitere Variante eines Reaktors ist in Figur 5 gezeigt. Hierbei wird der in Figur 2 beschriebene Reaktoraufbau mit einem Kühl- oder Heizkreislauf 33 kombiniert. So ist es möglich, einen möglichst langen Reaktionsweg auszunutzen und so zusätzlich entstehende Wärme abzuführen bzw. zusätzlich benötigte Wärme zuzuführen.

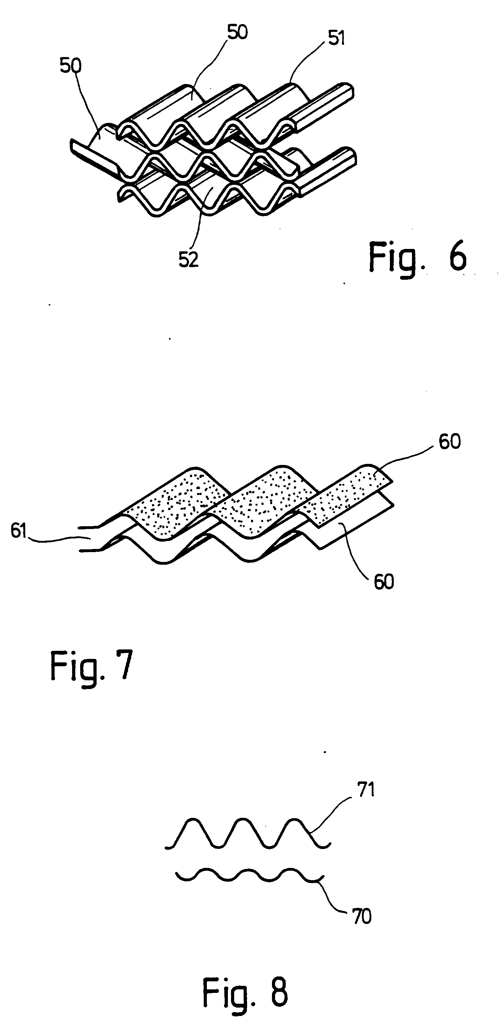

In den Figuren 6 bis 8 sind unabhängig vom gesamten Reaktoraufbau Möglichkeiten der Plattenanordnungen beispielhaft gezeigt.

In Figur 6 ist in perspektivischer Ansicht eine Plattenanordnung verdeutlicht.

Man erkennt deutlich, wie die Platten 50 abwechselnd im Winkel versetzt übereinander angeordnet sind. Die Platten 50 stützen sich dabei auf ihren, der gewellten Struktur entsprechenden, Wölbungen 51 ab.

Durch diese optimale Abstützung wird gleichzeitig auch bei sehr dünnen Wänden eine gute Stabilität erreicht. Da gerade dünnere Wände eine gute Leitfähigkeit besitzen, bieten sich hier optimale Konstruktionen an.

Durch die Platten 50 werden Kanäle 52 gebildet, die durch die Abstützungen der Wölbungen 51 nicht glatt durchgehend sind. Durch diese Hindernisse im Fluidstrom und/oder Heiz- bzw. Kühlmittelstrom kommt es zu einer besseren Verwirbelung der Medien und damit besseren Wirkungsweise der gesamten Anordnung.

Als Versetzungswinkel ist jeder Winkel zwischen 0° und 90° möglich.

Des weiteren ist eine, wie Figur 7 zeigt, ineinanderliegende Anordnung gewellter Strukturen möglich. Die Platten 60 sind so angeordnet, daß sich ein durchgehender Kanal 61 ergibt. Zwischen den Platten sind, hier nicht gezeigte, zusätzliche Abstützungen vorgesehen.

Weiterhin kann es, wie aus Figur 8 hervorgeht, zweckmäßig sein, wenn Platten 70 und 71 eingesetzt werden, die eine unterschiedliche Gestaltung sowohl in der Höhe als auch im Abstand der aufeinanderfolgenden gewellten Strukturen aufweisen.

Die Erfindung beschränkt sich nicht auf die dargestellten Ausführungsbeispiele, sondern stellt auf alle Reaktortypen ab, die Katalysatoren beinhalten, denen Aufheiz- und/oder Abkühlzonen für das Fluid zugeordnet sein können.

So ist es insbesondere auch im Rahmen der Erfindung, wenn die gezeigten Katalysatorbereiche 11, 22, 36 nicht durchgehend mit einem Katalysator ausgestattet beziehungsweise beschichtet sind, sondern auch katalysatorfreie Bereiche aufweisen. Damit wäre eine noch genauere Wärmeführung des gesamten Verfahrensablaufes möglich.

Im übrigen ist es möglich die Fluidpfade auf beliebige Weise mit einem Katalysator auszustatten. Beispielsweise kann auf eine Beschichtung der Wände mit Katalysatormasse verzichtet werden und stattdessen eine katalysatorbeschichtete Struktur, zum Beispiel ein Gitter, oder eine Katalysator-Schüttung in den Fluidpfad eingebracht werden.

## Patentansprüche

1. Reaktor zur katalytischen Behandlung eines gasförmigen Fluids mit einem Reaktorgehäuse und zur gegenläufigen Führung des Fluids geeigeneten Fluidpfaden, **dadurch gekennzeichnet**, daß benachbarte Fluidpfade (19, 21) in mindestens einem Teilbereich (11, 22) mit Katalysator (12, 23) ausgestattet sind und nicht mit Katalysator (12, 23) ausgestattete Bereiche (13, 14, 24) als Wärmetauscher zwischen den benachbarten Fluidpfaden (19, 21) dienen.

2. Reaktor nach Anspruch 1, **dadurch gekennzeichnet**, daß die Fluidpfade (19,21) von Strukturen (10), vorzugsweise Platten gebildet sind, die eine von einer ebenen Fläche abweichende Oberfläche besitzen.

3. Reaktor nach einem der vorhergehenden Ansprüche, **dadurch gekennzeichnet**, daß dem mit Katalysator (12) ausgestatteten Bereich (11) Bereiche (13; 14) ohne Katalysator vor- bzw. nachgeordnet sind.

4. Reaktor nach einem der vorhergehen Ansprüche, **dadurch gekennzeichnet**, daß die Fluidpfade (19) unterschiedliche Funktionsbereiche für die Erwärmung, für die Reaktion und für die Wärmeabgabe aufweisen.

5. Reaktor nach Anspruch 1, **dadurch gekennzeichnet**, daß in einem Reaktorgehäuse feststehende Platten (20) vorzugsweise parallel beabstandet zueinander angeordnet sind, die Platten (20) Fluidpfade (21) bilden, zwei jeweils nicht benachbarte Platten (20) miteinander verbunden sind, daß sich ein um insbesondere 180° geknickter Fluidpfad ergibt und die Platten (20) in mindestens einem Bereich (22) mit einem Katalysator (23) ausgestattet sind.

6. Reaktor nach Anspruch 5, **dadurch gekennzeichnet**, daß dem mit Katalysator (23) ausgestatteten Bereich (22) ein Bereich (24) ohne Katalysator vorgeordnet ist.

7. Reaktor nach Anspruch 5 und 6, **dadurch gekennzeichnet**, daß die Fluidpfade (21) in einem Sammelkanal (27) münden.

8. Reaktor nach Anspruch 7, **dadurch gekennzeichnet**, daß der Sammelkanal (27) einen Wärmeabzug (28) besitzt.

9. Reaktor nach einem der Ansprüche 7 bis 8, **dadurch gekennzeichnet**, daß der Sammelkanal (27) eine Vorheizeinrichtung (30) besitzt.

10. Reaktor nach einem der Ansprüche 1 bis 9, **dadurch gekennzeichnet**, daß im Zufluß des Fluids eine Vorheizeinrichtung (29) angeordnet ist.

11. Reaktor nach Anspruch 1, **dadurch gekennzeichnet**, daß in einem Reaktorgehäuse feststehende Platten (32) parallel beabstandet zueinander angeordnet sind, die Platten (32) getrennte Fluidpfade (31) und Kanäle (34) bilden und die Platten (32) in mindestens einem Bereich (36) mit einem Katalysator (35) ausgestattet sind.

12. Reaktor nach Anspruch 11, **dadurch gekennzeichnet**, daß die Kanäle (34) Bestandteil eines Kühl- oder Heizmittelkreislaufs (33) sind.

13. Reaktor nach Anspruch 1, **dadurch gekennzeichnet**, daß in einem Reaktorgehäuse feststehende Platten (20) parallel beabstandet zueinander angeordnet sind, die Platten (20) Fluidpfade (21) bilden, zwei jeweils nicht benachbarte Platten (20) miteinander verbunden sind, daß sich ein um 180° geknickter Fluidpfad ergibt und die Platten (20) in mindestens einem Bereich (22) mit einem Katalysator (23) ausgestattet sind und zwischen zwei geknickten Fluidpfaden Kanäle (41) angeordnet sind.

14. Reaktor nach Anspruch 13, **dadurch gekennzeichnet**, daß die Kanäle (41) Bestandteil eines Kühl- oder Heizmittelkreislaufs (33) sind.

15. Reaktor nach einem der vorhergehenden Ansprüche, **dadurch gekennzeichnet**, daß die Platten (10; 20; 32) einseitig mit Katalysator ausgestattet vorzugsweise beschichtet sind.

16. Reaktor nach einem der vorhergehenden Ansprüche, **dadurch gekennzeichnet**, daß die Bereiche (11; 22; 36) nicht durchgehend mit einem Katalysator (12; 23; 35) ausgestattet sind.

17. Reaktor nach einem der vorhergehenden Ansprüche, **dadurch gekennzeichnet**, daß in den mit Katalysator ausgestatteten Bereichen der Fluidpfade die die Fluidpfade bildenden Strukturen mit einem Katalysator beschichtet sind.

18. Reaktor nach einem der vorhergehenden Ansprüche, **dadurch gekennzeichnet**, daß der Katalysator in den Fluidpfaden (19; 21; 31) als Schüttung eingebracht ist.

19. Reaktor nach einem der vorhergehenden Ansprüche, **dadurch gekennzeichnet**, daß der Katalysator in den Fluidpfaden (19; 21; 31) auf zusätzlichen, nicht mit den Wänden identischen, Strukturen aufgebracht ist.

20. Reaktor nach einem der vorhergehenden Ansprüche, **dadurch gekennzeichnet**, daß Platten (10; 20; 32) Wellblech sind, deren Wellen aufeinanderfolgender Platten gegeneinander verdreht sind, so daß sie einen Winkel miteinander bilden und eine entgegengesetzte Orientierung aufweisen.

21. Reaktor nach Anspruch 20, **dadurch gekennzeichnet**, daß die Platten (50) so angeordnet sind, daß die Wölbungen (51) sich gegenüberstehen und berühren und sich eine Anzahl von Kanälen (52) ergibt.

22. Reaktor nach einem der vorhergehenden Ansprüche, **dadurch gekennzeichnet**, daß Platten (10; 20; 32; 50; 60; 70) nicht parallel und/oder verdreht zueinander angeordnet sind.

23. Reaktor nach einem der vorhergehenden Ansprüche, **dadurch gekennzeichnet**, daß die Platten (70; 71) eine voneinander abweichende Dimensionierung der gewölbten Strukturen in der Höhe und/oder dem Abstand haben.

## Claims

1. A reactor for catalytically processing a gaseous fluid, having a reactor housing and fluid paths suitable for conveying the fluid in counter-current, **characterized in that** adjacent fluid paths (19, 21) are provided in at least one partial area (11, 22) with a catalyst (12, 23), and areas (13, 14, 24) not provided with a catalyst (12, 23) act as heat exchangers between the adjacent fluid paths (19, 21).

2. A reactor according to Claim 1, **characterized in that** the fluid paths (19, 21) are formed by structures (10), preferably plates, having a surface deviating from a flat area.

3. A reactor according to one of the preceding Claims, **characterized in that** areas (13; 14) without a catalyst are arranged upstream and downstream of the area (11) provided with a catalyst (12).

4. A reactor according to one of the preceding Claims, **characterized in that** the fluid paths (19) have different functional areas for heating, for the reaction and for heat emission.

5. A reactor according to Claim 1, **characterized in that** plates (20) fixed in a reactor housing are arranged preferably parallel and at a distance from one another, the plates (20) form fluid paths (21), two plates (20) not respectively adjacent are connected to each other, a fluid path bent in particular through 180° is produced and the plates (20) are provided in at least one area (22) with a catalyst (23).

6. A reactor according to Claim 5, **characterized in that** an area (24) without a catalyst is arranged upstream of the area (22) provided with a catalyst (23).

7. A reactor according to Claims 5 and 6, **characterized in that** the fluid paths (21) open into a collecting duct (27).

8. A reactor according to Claim 7, **characterized in that** the collecting duct (27) has a heat outlet (28).

9. A reactor according to Claim 8, **characterized in that** the collecting duct (27) has a pre-heating device (30).

10. A reactor according to one of Claims 1 to 9, **characterized in that** a pre-heating device (30) is arranged in the feed of the fluid.

11. A reactor according to Claim 1, **characterized in that** plates (32) fixed in a reactor housing are arranged parallel and at a distance from one another, the plates (32) form separate fluid paths (31) and ducts (34), and the plates (32) are provided in at least one area (36) with a catalyst (35).

12. A reactor according to Claim 11, **characterized in that** the ducts (34) form part of a coolant or heating-medium circuit (33).

13. A reactor according to Claim 1, **characterized in that** plates (20) fixed in a reactor housing are arranged parallel and at a distance from one another, the plates (20) form fluid paths (21), two plates (20) not respectively adjacent are connected to each other, a fluid path bent through 180° is produced and the plates (20) are provided in at least one area (22) with a catalyst (23), and ducts (41) are arranged between two bent fluid paths (41).

14. A reactor according to Claim 13, **characterized in that** the ducts (41) form part of a coolant or heating-medium circuit (33).

15. A reactor according to one of the preceding Claims, **characterized in that** the plates (10; 20; 32) are provided, preferably coated, with a catalyst on one side.

16. A reactor according to one of the preceding Claims, **characterized in that** the areas (11; 22; 36) are not provided continuously with a catalyst (12; 23; 35).

17. A reactor according to one of the preceding Claims, **characterized in that** in the areas of the fluid paths provided with a catalyst the structures forming the fluid paths are coated with a catalyst.

18. A reactor according to one of the preceding Claims, **characterized in that** the catalyst in the fluid paths (19; 21; 31) is introduced as a fill.

19. A reactor according to one of the preceding Claims, **characterized in that** the catalyst in the fluid paths (19; 21; 31) is applied to additional structures not identical with the walls.

20. A reactor according to one of the preceding Claims, **characterized in that** the plates (10; 20; 32) are corrugated metal sheet, of which the corrugations of successive plates are turned opposite each other, so that they form an angle and have an opposite orientation.

21. A reactor according to Claim 20, **characterized in that** the plates (50) are arranged in such a way that the convex portions (51) are opposite one another and touch one another and form a plurality of troughs (52).

22. A reactor according to one of the preceding Claims, **characterized in that** plates (10; 20; 32; 50; 60; 70) are arranged not parallel and/or turned with respect to one another.

23. A reactor according to one of the preceding Claims, **characterized in that** the plates (70; 71) have a dimensioning of the convex structures which differs in height and/or in distance.

## Revendications

1. Réacteur de traitement catalytique d'un fluide gazeux, comprenant un corps de réacteur et des trajets de fluide adaptés au guidage du fluide à contre-courant du fluide, caractérisé en ce que des trajets de fluide (19, 21), voisins sont garnis de catalyseurs (12, 23) au moins dans une zone (11, 22) et les zones (13, 14, 24) non garnies de catalyseurs (12, 23) servent d'échangeurs de chaleur entre les trajets de fluide voisins (19, 21).

2. Réacteur selon la revendication 1, caractérisé en ce que les trajets de fluide (19, 21) sont formés par des structures (10) de préférence des plaques ayant une surface en amont plane

3. Réacteur selon l'une quelconque des revendications précédentes, caractérisé en ce qu'à la zone (11) garnie de catalyseur (12) sont associées en amont et en aval des zones (13, 14) sans catalyseur.

4. Réacteur selon l'une des revendications précédentes, caractérisé en ce que les trajets de fluide (19) ont des zones de fonctions différentes pour le chauffage, la réaction et l'échange de chaleur.

5. Réacteur selon la revendication 1, caractérisé en ce que des plaques fixes (20) dans un corps de réacteur sont disposées de préférence à intervalle parallèle, les plaques (20) formant les trajets de fluide (21) et chaque fois deux plaques (20) non voisines sont reliées l'une à l'autre formant un trajet de fluide replié notamment à 180° et les plaques (20) sont garnies d'un catalyseur (23) au moins dans une zone (22).

6. Réacteur selon la revendication 5, caractérisé en ce que la zone (22) garnie de catalyseur (23) est précédée d'une zone (24) sans catalyseur.

7. Réacteur selon les revendications 5 et 6, caractérisé en ce que les trajets de fluide (21) débouchent dans un canal collecteur (27).

8. Réacteur selon les revendications 5 à 7, caractérisé en ce que le canal collecteur (27) comporte un moyen d'extraction de chaleur (28).

9. Réacteur selon l'une des revendications 7 à 8, caractérisé en ce que le canal collecteur (27) comporte une installation de préchauffage (30).

10. Réacteur selon l'une des revendications 1 à 9, caractérisé par une installation de préchauffage (29) dans l'alimentation de fluide.

11. Réacteur selon la revendication 1, caractérisé par des plaques (32) fixes dans le corps du réacteur et qui sont écartées parallèlement, les plaques (32) formant des trajets de fluide séparés (31) et des canaux (34) et les plaques (32) sont munies de catalyseur (35) au moins dans une zone (36).

12. Réacteur selon la revendication 11, caractérisé en ce que les canaux (34) font partie d'un circuit de fluide de refroidissement ou de chauffage (33).

13. Réacteur selon la revendication 1, caractérisé en ce que des plaques (20) fixes dans un corps de réacteur sont disposées écartées de manière parallèle les unes des autres, les plaques (20) formant des trajets de fluide (21) et deux plaques (20) non voisines sont reliées de façon à former un trajet de fluide replié à 180° et les plaques (20) dans au moins une zone (22) sont munies d'un catalyseur (23), et des canaux (41) sont prévus entre deux trajets de fluide repliés.

14. Réacteur selon la revendication 13, caractérisé en ce que les canaux (41) font partie d'un circuit de fluide de refroidissement ou de chauffage (33).

15. Réacteur selon l'une des revendications précédentes, caractérisé en ce que les plaques (10 ; 20 ; 32) sont munies de catalyseur sur une de leurs faces, de préférence par enduction.

16. Réacteur selon l'une quelconque des revendications précédentes, caractérisé en ce que les zones (11 ; 22 ; 36) ne sont pas munies de manière continue d'un catalyseur (12 ; 23 ; 35).

17. Réacteur selon l'une des revendications précédentes, caractérisé en ce que dans les zones des trajets de fluide garnies de catalyseur, les structures qui forment les trajets de fluide sont revêtues ou enduites d'un catalyseur.

18. Réacteur selon l'une des revendications précédentes, caractérisé en ce que le catalyseur est déversé en vrac dans les trajets de fluide (19 ; 21 ; 31).

19. Réacteur selon l'une des revendications précédentes, caractérisé en ce que le catalyseur est prévu dans les trajets de fluide (19 ; 21 ; 31) sur des structures supplémentaires différentes des parois.

20. Réacteur selon l'une des revendications précédentes, caractérisé en ce que les plaques (10 ; 20 ; 32) sont de la tôle ondulée dont les ondulations de plaques successives sont tournées les unes par rapport aux autres pour former entre elles un angle et possèdent une orientation opposée.

21. Réacteur selon la revendication 20, caractérisé en ce que les plaques (50) sont disposées de façon que les parties bondées (51) soient opposées et se touchent en formant un certain nombre de canaux (52).

22. Réacteur selon l'une des revendications précédentes, caractérisé en ce que les plaques (10 ; 20 ; 32 ; 50 ; 60 ; 70) sont non parallèles et/ou tournées les unes par rapport aux autres.

23. Réacteur selon l'une des revendications précédentes, caractérisé en ce que les plaques (70 ; 71) ont un dimensionnement différent pour les structures bombées, pour la hauteur et/ou l'écartement.
